# EUROPEAN PATENT APPLICATION

(11) **EP 4 818 646 A1**
(43) Date of publication of application: **07.10.2026**
(21) Application number: 25168263.9
(22) Date of filing: 03.04.2025
(51) Int. Cl.: G01D 5/14, B60T 7/04, F16H 59/00, H03K 17/00

(54) **A MAGNET HOLDER FOR A PLUNGER OF A STROKE SENSOR**

(71) Applicant: KB Intellectual Property GmbH & Co. KG, 82049 Pullach (DE)
(72) Inventor: RÖTHER, Friedbert, 74389 Cleebronn (DE); WIMMER, David, 70619 Stuttgart (DE); ZANNINI, Lukas, 70195 Stuttgart (DE)

(57) **Abstract**

Disclosed is a magnet holder (100) for securing a magnet (124) to a plunger (200) of a stroke sensor. The stroke sensor comprises a cylindrical body, the plunger (200) is located within the cylindrical body, and the stroke sensor is configured to sense, based on the magnet (124), a displacement of the plunger (200) within the cylindrical body. The magnet holder (100) comprises an interlocking element (110), configured to interlock with a groove (210) in the plunger (200), and, when interlocked, to allow angular play of the plunger (200) around at least one axis.

## Description

The present invention relates to a magnet holder for securing a magnet to a plunger of a stroke sensor, to a stroke sensor for a foot brake module, to a vehicle with a foot brake module, and in particular to a shear-force- and moment-free guidance through crowning and an angle of arms between the guide bar and the groove.

In foot brake modules of vehicles, in particular trucks and long-haul commercial vehicles, foot brake modules may comprise a pedal for receiving a brake demand from a driver, and rely on accurate measurements of driver demands for a brake action. This is in particular the case in electronic braking systems, which are used widely in commercial vehicles, but also for conventional pneumatic or hydraulic braking systems. In such modules, the brake demand may be transmitted as a force to a stroke sensor, comprising a plunger configured to slide in a cylindrical body, where a linear displacement of the plunger within the cylindrical body will be measured for determining actions of the brake system in order to meet the brake demand. It is thus important to accurately measure axial displacements by stroke sensors, for example of plunger or piston relative to a cylinder. The displacement may be sensed by fixing a magnet to the plunger and picking up changes in the magnetic field of the magnet by a stationary magnetic field sensor when the plunger moves.

An example for such an arrangement is disclosed in DE 10 2019 104 936 A1, which shows a plunger connected to a brake pedal which is mounted in a cylindrical housing and is displaced relative to the housing when the brake pedal is actuated. A permanent magnet is attached to the plunger, a magnetic field sensor detects the magnetic field generated by the permanent magnet, and an electronic circuit derives the control signal from signals obtained by the magnetic field sensor. Some context, including how the electronics may derive the control signal, is disclosed in DE 10 2016 004 489 A1.

Further examples show various ways of connecting the magnet to the plunger. For example, EP 2 110 642 B1 shows a plunger with a recess for holding the magnet.

US 8,049,492 B2 discloses a guide pin inserted from one end into a cylindrical sleeve where the magnet is fixed to the tip of the pin by means of a spring supported on the opposite end of the sleeve.

A persistent problem with measuring the displacement of the plunger in the cylindrical body is that the force from the brake pedal can move the plunger in unintended ways. In particular, the force often leads to a torque on the plunger, and thus to a rotation of the plunger in the cylindrical body. The rotation moves the magnet and distorts the magnetic field measurement.

This problem is addressed e.g. in EP 1 369 328 B1, which discloses a prevention of a rotation of a plunger by means of a window for inserting the magnet, which acts like a pin in a guiding slit. In contrast, EP 2 257 712 B1 discloses a magnet holder arranged rotatably around a part of the plunger, such that rotations of the plunger do not lead to a rotation the magnet.

However, in addition to rotations the force can also push the plunger in a direction which is inclined with respect to an axis of the cylindrical body along which the linear displacement should take place. As with rotations, such unintended oblique movements of the plunger again lead to corresponding movements of the magnet, and distort the results of the magnetic field sensor.

Furthermore, by the unintended components, the force on the plunger - which in some embodiments can reach up to 2.5 kN - can exert a strong mechanical stress on the system, leading to early degradations and even to breakage of components in the stroke sensor. This may also affect the magnetic field sensor, which typically is a delicate device located in close proximity of the magnet.

Therefore, there is a demand for a technique to attach a magnet to a plunger in a stroke sensor of a foot brake module such that the effect of unintended movements (rotation) of the plunger on a movement of the magnet is at least mitigated. Advantageously, the technique generally reduces stresses on the system, and in particular on the magnet and magnetic field sensor.

At least some of the problems described above are overcome by a magnet holder for securing a magnet to a plunger of a stroke sensor according to claim 1, by a stroke sensor for a foot brake module according to claim 9, and by a vehicle according to claim 13. The dependent claims refer to further advantageous realizations of the subject matter of the independent claims.

The present invention relates to a magnet holder for securing a magnet to a plunger of a stroke sensor. The stroke sensor comprises a cylindrical body, the plunger is located within the cylindrical body, and the stroke sensor is configured to sense, based on the magnet, a displacement of the plunger within the cylindrical body. T hich discloses a prevention of a rotation of a plunger by means of a window for inserting the magnet, which acts like a pin in a guiding slit. In contrast, EP 2 257 712 B1 discloses a magnet holder arranged rotatably around a part of the plunger, such that rotations of the plunger do not lead to a rotation the magnet.

The stroke sensor may be a component of a foot brake module, FBM, i.e. of an assembly configured to receive an input from a driver via a pedal, and either to convert that input to an electric signal configured to be transmitted to a proportional valve, an electrically controlled pressure valve, an electronic control unit (or modulator) of a brake system, and/or to use that input to (immediately) control a pressure at a pressure valve or a relay valve for controlling a brake of a brake system.

In particular, the driver may exert a force, via the pedal and a transmission mechanism, on the plunger. The plunger may be movable within the cylindrical body, and may be configured to undergo a displacement with respect to the cylindrical body due to the force. The displacement may be an axial displacement, i.e. a displacement with respect to a main axis of the cylindrical body and/or of the plunger. The displacement may be sensed on the basis that the magnet being attached to the plunger also undergoes the displacement, which in turn may be picked up by a magnetic field sensor fixed relatively to the cylindrical body.

The magnetic field sensor and the magnet may thus be configured to measure the displacement of the plunger in the cylinder. The magnetic field sensor may be any sensor whose signals can be used to determine a change of a magnetic field (in magnitude and/or direction) at or around the magnetic field sensor. In operation, the change of the magnetic field is caused by the axial displacement of the magnet relative to the magnetic field sensor. The magnetic field sensor may in particular be a magnetoresistive sensor, where the change in the magnetic field results in a change of a resistance in a sensor element. Examples for such magnetic field sensors, or magnetoresistive sensors, include a Hall-effect sensor, a GMR (giant magneto-resistance) sensor, an AMR (anisotropic magneto-resistance) sensor, or a TMR (tunnel magneto-resistance) sensor. A Hall-effect sensor does not need magnetic material, whereas GMR, TMR, or AMR sensors rely at least in part on magnetic materials.

The cylindrical body may comprise a hull, or a frame, for guiding the plunger. In some embodiments, the cylindrical body may comprise a cylinder in which the plunger is configured to move. The cylinder may be closed on one end. The plunger may also comprise a cylindrical shape, and the groove may extend in a circumferential (azimuthal) direction at least partially around the plunger, perpendicularly to a direction of the displacement. The plunger may comprise a cavity with walls or surfaces configured to provide support to one or more springs configured to control a movement of the plunger, and/or to counteract the force, i.e. to move the plunger back when the force exerted by the driver input is gone.

The magnet holder may comprise a body providing a mounting space for the magnet. The body may have a roughly cylindrical shape, or at least extend along a longitudinal axis which, when the magnet holder is interlocked and in a neutral position with respect to the plunger, may be positioned parallel to a longitudinal axis of the plunger or the cylindrical body, and/or parallel to the direction of the displacement. The cylindrical body may comprise or be integrally connected with means for guiding the magnet holder when the plunger undergoes the displacement.

The force from the pedal may also exert a torque on the plunger, such that the plunger, in addition to the displacement to be measured, can also undergo a rotation.

Furthermore, the force on the plunger, which may reach up to 2.5 kN, can have components which move the plunger in unintended ways, e.g. slightly inclined or obliquely to an axis of the cylindrical body, or to the direction of the displacement which is to be measured. If such a deviation were to affect also the movement of the magnet holder, the measurement signal of the magnetic field sensor would be distorted; the magnet would not move in a way sufficiently controlled to reliably measure the displacement by the magnetic field sensor.

The interlocking element may be configured to slide in the groove when the plunger undergoes rotation. The magnet holder may be supported by the cylindrical body such that when the plunger rotates, the magnet holder does not, i.e. remains at the same angular position. The cylindrical body may for example exhibit a slit through which the magnet holder extends, keeping the magnet holder from rotating with the plunger. The magnet holder may thus act like a pin in the groove.

Moreover, the magnet holder, when interlocked with the groove in the plunger, allows angular play around at least one axis. When the plunger moves in an unintended way, in particular deviating from the intended direction of the displacement by some angle, the plunger, based e.g. on a support on the cylindrical body, can therefore pivot and undergo merely the displacement in the intended direction. The angular play may thus allow a tilting of the magnet holder within a guidance structure provided e.g. by the cylindrical body, without a transmission of a moment or a transverse force. The angular play can therefore be employed to control the movement of the magnet sufficiently to make a reliable measurement of the displacement. Furthermore, since the magnet holder is merely interlocked in a groove of the plunger, and thus not fixedly attached to the plunger, allows for the interlock to partially disengage when the plunger and the magnet holder are displaced, which can further reduce mechanical stress on the magnet holder, on the guidance structure of the magnet holder, and on the magnetic field sensor.

The term "angular play" may concretely refer to a rotatability around the at least one axis over a small angular range.

Optionally, the angular play amounts to movements within at least one degree and/or at most 10 degrees.

Especially due to vibrations in vehicles, an angular play which is too large may destabilize the setup of plunger, cylindrical body, and magnet holder, and may again lead to inaccuracies in the sensing of the displacements. In some cases, a minimum angular play must be allowed in order to achieve the desired effect. A range with boundaries between one and 10 degrees has proved to be advantageous. In embodiments, ranges for the angular play with lower bounds at about 2 degrees and/or with upper bounds between 3 and 4 degrees have been found to be particularly advantageous.

Optionally the at least one axis coincides, when the magnet holder is in a neutral position with respect to the plunger, with a circumferential direction of the plunger, and/or with a radial direction of the plunger.

The term "neutral position" may refer to a particular alignment of magnet holder and plunger in the interlocked state. The neutral position may e.g. be assumed when the magnet holder is interlocked with the plunger and no force is applied to the plunger, based on a support in a guidance structure of the magnet holder. In advantageous embodiments, the axis in the circumferential direction entails that a tilting of the magnet holder is possible in the groove towards the plunger (or towards a guide provided e.g. by the cylindrical body), and the axis in a radial direction entails that a tilting of the magnet holder is possible in a direction transverse to the plunger (or to a guide provided by the cylindrical body). In advantageous embodiments, the at least one axis comprises both the axis in the circumferential direction as well as the axis in a radial direction.

Optionally the at least one axis coincides, when the magnet holder is in a neutral position with respect to the plunger, with a circumferential direction of the plunger, and/or with a radial direction of the plunger.

The term "neutral position" may refer to a particular alignment of magnet holder and plunger in the interlocked state. The neutral position may e.g. be assumed when the magnet holder is interlocked with the plunger and no force is applied to the plunger, based on a support in a guidance structure of the magnet holder. In advantageous embodiments, the axis in the circumferential direction entails that a tilting of the magnet holder is possible in the groove towards the plunger (or towards a guide provided e.g. by the cylindrical body), and the axis in a radial direction entails that a tilting of the magnet holder is possible in a direction transverse to the plunger (or to a guide provided by the cylindrical body). In advantageous embodiments, the at least one axis comprises both the axis in the circumferential direction as well as the axis in a radial direction.

The interlocking element may comprise a guide bar which is configured to enter the groove of the plunger. The guide bar may be fixed to a body of the magnet holder, wherein this holding body is configured to hold the magnet. The guide bar may be configured to slide along the groove, such that a rotation of the plunger does not lead to a rotation of the magnet holder in the interlocked state.

Optionally the interlocking element, or guide bar, comprises two arms, configured to fit into the groove and partially encompass a circumference of the plunger at a bottom of the groove.

In some embodiments, the guide bar, or the two arms together, may roughly have the shape of a beam which is bent to substantially fit the curvature of the groove as the latter extends (at least partially) around the plunger. The arms may then refer to portions of the beam on respective sides of a point where the beam is attached to the holding body.

That the two arms, or respectively the guide bar, encompass the circumference of the plunger at the location of the groove only partially has advantages over e.g. a full ring around the plunger, since friction between the interlocking element and the plunger is reduced, and the interlocking element does less easily get jammed in the groove. oreover, the magnet holder, when interlocked with the groove in the plunger, allows angular play around at least one axis. When the plunger moves in an unintended way, in particular deviating from the intended direction of the displacement by some angle, the plunger, based e.g. on a support on the cylindrical body, can therefore pivot and undergo merely the displacement in the intended direction. The angular play may thus allow a tilting of the magnet holder within a guidance structure provided e.g. by the cylindrical body, without a transmission of a moment or a transverse force.

Optionally the interlocking element allows the angular play based on the two arms having a cross-section with a crowning. In some embodiments, the cross-section of the arms may exhibit a rounded profile. Crowning may refer to a cross-sectional thickening of the arms that deviates from a basically cylindrical shape. Based on the crowning, the at least one axis may coincide, when the magnet holder is in a neutral position with respect to the plunger, with the circumferential direction of the plunger, as described above.

In addition, or alternatively, each arm may exhibit a tapering towards an end of the respective arm. The tapering of the arms may also be described as an angle of the arms. The tapering may also be realized as a decrease of a diameter of the respective arm towards the outer end of that arm. Based on such a tapering, the at least one axis may coincide, when the magnet holder is in a neutral position with respect to the plunger, with the radial direction of the plunger, as described above.

In addition, or alternatively, a diameter of the arms perpendicular to a longitudinal extent of the arms may be smaller than a diameter of the groove perpendicular to a longitudinal extent of the groove. If the diameter of the arms is smaller than the diameter of the groove, the arms exhibit translational play in the groove. In this case, the arms do not fully interlock in the groove. This feature can facilitate a pivoting movement of the magnet holder. In advantageous such embodiments, the magnet holder is held in place by a spring exerting a restoring force towards a neutral position.

Optionally, if the magnet holder comprises a holding body for holding the magnet, the magnet holder also comprises a spring supported on the holding body, wherein the spring is configured to be supported on a stop fixed to the cylindrical body such that the magnet holder, when interlocked with the groove in the plunger, is held by the spring in a neutral position with respect to the plunger.

In embodiments, the spring may exert a restoring force on the magnet holder in particular whenever the magnet holder is outside of a neutral position with respect to the plunger. If the magnet holder is configured to move within a guiding structure comprised, or fixedly attached, to the cylindrical body, the spring may be configured to find support on a part of the guiding structure.

Optionally the magnet holder comprises the magnet in a plastic overmolding, and/or in a recess. The magnet holder may in particular comprise the magnet in the holding body

In this way, the magnet may be comprised within the magnet holder, and in particular in a body of the magnet holder. The holding body may be configured to slide inside a guiding structure comprised in the cylindrical body (or fixed to the cylindrical body), and the sliding may be facilitated by a structure of a surface of the overmolding.

Embodiments further relate to a stroke sensor for a foot brake module. The stroke sensor comprises a cylindrical body, a plunger, located within the cylindrical body and configured to undergo a displacement in the cylindrical body, a magnet, and the magnet holder as described above. The magnet holder is then configured to secure the magnet to the plunger, and the stroke sensor is configured to sense, based on the magnet, the displacement of the plunger within the cylindrical body.

The stroke sensor may comprise a guiding structure for the magnet holder, which is configured to guide the magnet holder when a force is exerted on the plunger.

Optionally the stroke sensor, or this guiding structure, comprises a chamber arranged at a side portion of the cylindrical body, and the magnet holder is arranged together with the magnet inside the chamber. If the magnet holder comprises the spring as described above, the spring may also be arranged in the chamber. The spring may e.g. extend between the holding body and a wall or surface of the chamber opposite the holding body. The wall or surface of the chamber may be spaced at an axial distance from the holding body.

Optionally the cylindrical body comprises an axial slot for receiving a part of the magnet holder, wherein the axial slot is configured to provide an axial guidance for the magnet holder while preventing relative rotations between the magnet holder and the cylindrical body. The slot may provide support and guidance to the magnet holder when displaced due to a motion of the plunger.

The stroke sensor may comprise a printed circuit board, which may be attached to the guide structure and/or to the chamber.

Optionally the stroke sensor comprises a magnetic field sensor which is included on a printed circuit board, PCB, of the strike sensor. The printed circuit board may thus comprise the magnetic field sensor. The printed circuit board may comprise electronics configured to determine an electric signal based on data from the magnetic field sensor The magnetic field sensor may be realized on the printed circuit board in a layered structure, by PCB tracks, and/or as a surface mounted device. The magnetic field sensor may in particular be a Hall sensor.

Embodiments further relate to a vehicle with a foot brake module comprising a stroke sensor as described above. The vehicle may be a commercial vehicle, and in particular a truck or long-haul commercial vehicle.

Advantages of the magnet holder, stroke sensor and vehicle include that when a force is exerted on the plunger of the stroke sensor, and the plunger, in reaction, moves in unintended directions within the cylindrical body, the magnet holder can freely slide within the groove and tilt or pivot around at least one axis, and advantageously at least two axes. Due to these free movements, stress on the magnet holder, and thereby on the magnetic field sensor, can be strongly reduced. The magnet holder can slide more freely in the guiding structure, and the magnet undergoes a more controlled displacement motion. In this way, both accuracy of the measurement of the linear displacement of the plunger as well as longevity of the stroke sensor can be increased.

Some examples of the systems and/or methods will be described in the following by way of examples only, and with respect to the accompanying figures, in which:
- Fig. 1: illustrates an embodiment of the magnet holder for securing a magnet according to the present invention;
- Fig. 2: illustrates further aspects of embodiments;
- Fig. 3: shows a cross-section of a magnet holder;
- Fig. 4: illustrates an embodiment of the stroke sensor according to the present invention.

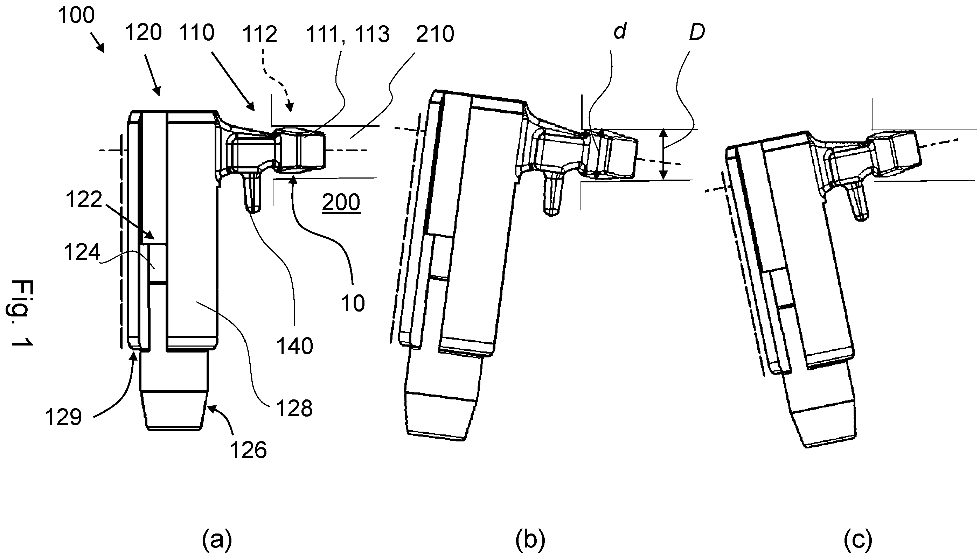

**Fig. 1** illustrates an embodiment of the magnet holder 100 for securing a magnet 124 to a plunger 200 of a stroke sensor. The stroke sensor comprises a cylindrical body (not depicted), the plunger 200 is located within the cylindrical body, and the stroke sensor is configured to sense, based on the magnet 124, a displacement of the plunger 200 within the cylindrical body. The magnet holder 100 comprises an interlocking element 110, configured to interlock with a groove 210 in the plunger 200. The magnet holder 100 is depicted in an interlocked state, in which it allows angular play around at least one axis.

To this end, Fig. 1 shows in a part (a) a side view (a view in a circumferential direction of the plunger 200, if the magnet holder 100 is interlocked with the plunger 200) of the magnet holder 100 in a neutral position relative to the plunger 200. For this side view, parts (b) and (c) of Fig. 1 illustrate the play of the magnet holder 100 where the magnet holder 100 is tilted around an axis coinciding with a circumferential direction of the plunger 200 (the axis is perpendicular to the drawing plane). The angular play may amount to movements within at most 10 degrees in both directions (b), (c) from the neutral position (a).

In this embodiment, the interlocking element 110 comprises a guide bar 113 for which one arm 111 is visible in the side views (a), (b), (c) shown in this Figure. The arms 111, 112 are configured to fit into the groove 210, and they partially encompass a circumference of the plunger 200 at a bottom of the groove 210.

The arms 111, 112 exhibit a crowning 10, which here is a spherical deviation from a rectangular cross-section. The crowning 10 is adapted such that surfaces of the arms 111, 112 support the tilting of the magnet holder 100 in the groove 210 around the circumferential axis. Each arm 111, 112 may also exhibit a tapering towards an end of the respective arm 111, 112. A maximal diameter d of the arms 111, 112 perpendicular to a longitudinal extent of the arms 111, 112 is in this embodiment almost the same as a diameter *D* of the groove 210 perpendicular to a longitudinal extent of the groove 210.

The magnet holder 100 comprises a holding body 120 for holding the magnet 124, and the magnet 124 is comprised in the magnet holder 100 body within a plastic overmolding 128. coincide tapered

The holding body 120 comprises a window 122 for holding the magnet 124 in the injection tool (or holding body 120). A surface of the holding body 120 is adapted to slide within a guiding structure (not depicted) which is fixedly attached to the cylindrical body. A magnetic field sensor (not depicted) may be attached to the guiding structure and configured to measure a position of the magnet 124, and thus of the plunger 200.

The holding body 120 comprises a tapered end 126 which is configured to hold a spring (not depicted). One end of the spring may be detachable from the holding body 120 and supported on a front face 129 of an overmolding 128 (which here forms a sheathing) of the holding body 120. In other embodiments, the spring may be fixed to the holding body 120 by being partially included in the overmolding 128. The other end of the spring may be supported on a stop fixed relatively to the cylindrical body, such as on a wall of a chamber of the guiding structure which hosts the holding body 120. The magnet holder 100, when interlocked with the groove 210 in the plunger 200, may experience a restoring force exerted by the spring which drives the magnet holder 100 towards the neutral position (a).

The magnet holder 100 comprises a pin 140 extending parallel to the holding body 120, close to the groove 210. The pin 140 may be employed to mount the magnet holder 100 in the groove 210.

The interlocking element 110 and the holding body 120 may be configured to admit a sliding of the magnet holder 100 in a slit of the cylindrical body (not shown). The guide bar 113 (i.e., the arms 111, 112) may have a length configured to hold the magnet holder 100 in the slit. In particular, a part of the interlocking element 110 including an upper side of the arms 111, 112 may be configured to fit with a form of the cylindrical body around the slit, and prevent the magnet holder 100 from accidentally dropping out of the slit, and - while it may be advantageous to allow small translational movements of the guide bar 113 in a direction out of the groove 210 - to keep the guide bar 113 from entirely unlocking from the groove 210.

In operation, the magnet holder 100, in addition to sliding laterally within the groove 210, can then tilt as shown without a moment or transverse force being transmitted.

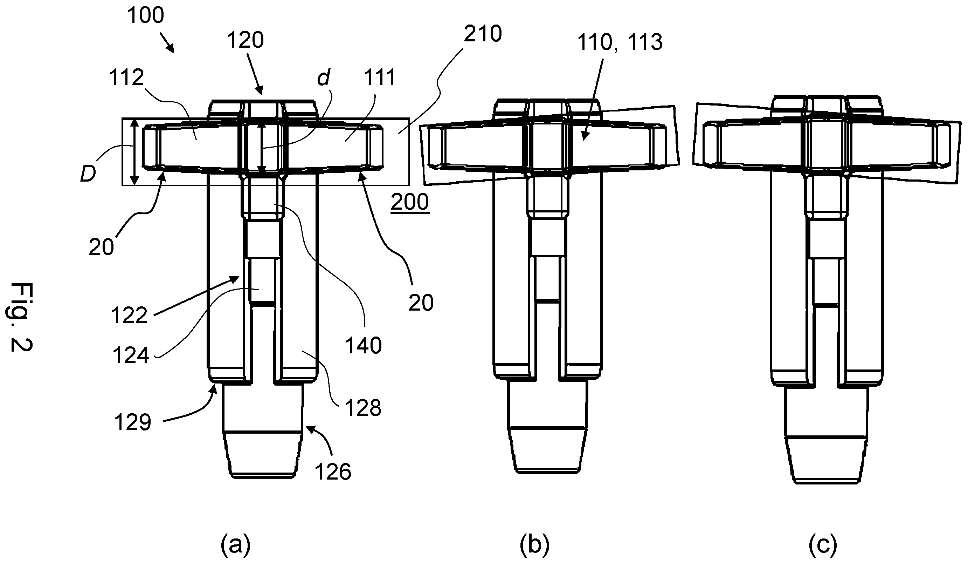

**Fig. 2** illustrates a further aspect of the same or different embodiments of the magnet holder 100 as in Fig. 1. Fig. 2 shows in a part (a) a bottom view (a view in a radial direction of the plunger 200 if the magnet holder 100 is the interlocked state) of the magnet holder 100 in a neutral position relative to the plunger 200.

The magnet holder 100 comprises an interlocking element 110, configured to interlock with a groove 210 in the plunger 200. The groove 210 is depicted only very schematically in this Figure. The magnet holder 100 is depicted in an interlocked state, in which it allows angular play around at least one axis. In a part (a) of Fig. 2, the magnet holder 100 is in a neutral position relative to the plunger 200. For this bottom view, parts (b) and (c) of Fig. 2 illustrate the play of the magnet holder 100 where the magnet holder 100 is tilted around an axis coinciding with a radial direction of the plunger 200 (the axis is perpendicular to the drawing plane). The angular play may again amount to movements within at most 10 degrees, or at most 4 degrees, in both directions from the neutral position.

The interlocking element 110 again comprises a guide bar 113 with two arms 111, 112, which are both visible in the bottom views (a), (b), (c) depicted in Fig. 2. As before, the arms 111, 112 are configured to fit into the groove 210, and they partially encompass a circumference of the plunger 200 at a bottom of the groove 210.

Each arm 111, 112 may also exhibit a tapering 20 towards an end of the respective arm 111, 112. In addition, a maximal diameter d of the arms 111, 112 perpendicular to a longitudinal extent of the arms 111, 112 is smaller than a diameter D of the groove 210 perpendicular to a longitudinal extent of the groove 210. Due to these features, the magnet holder 100 has play, and can freely pivot around the radial axis within the bounds mentioned above. The arms 111, 112 may also exhibit a crowning 10, as depicted in Fig. 1.

The neutral position (a) is here depicted as a situation where the guide bar 113 abuts to one side of the groove 210. In other embodiments, the neutral position (a) may be a position where the guide bar 113 abuts to the other side of the groove 210, or is held at a middle line of the groove 210.

The magnet holder 100 again comprises a holding body 120 for holding the magnet 124, and may be the same or similar as in Fig. 1. In operation, the magnet holder 100, in addition to sliding laterally within the groove 210 and possibly tilting around a circumferential axis, can tilt as shown without a moment or transverse force being transmitted.

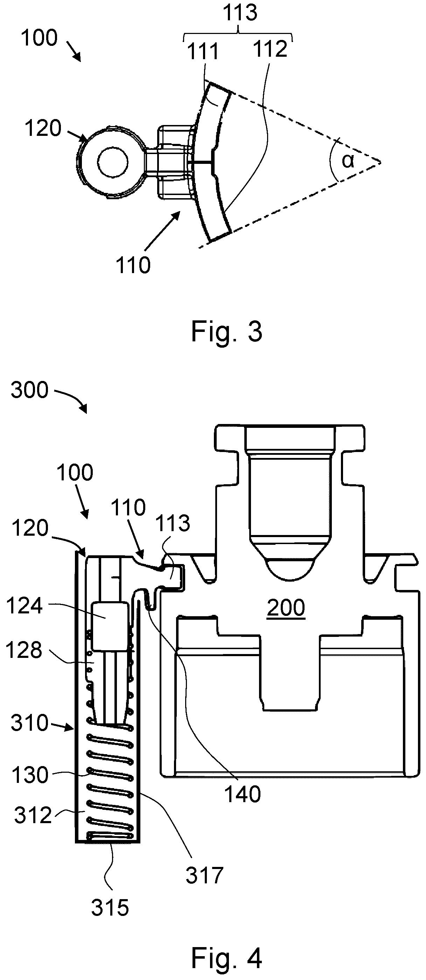

**Fig. 3** shows a cross-sectional view of the magnet holder 100 as in the embodiments of Fig. 1 and Fig. 2 in a plane transversal to the direction of displacement. The two arms 111, 112 together for the guide bar 113 and span an angle α between 20 and 40, or about 50 degrees of a circumference of the plunger 200 at the groove 210. This size of the arms 111, 112 has proved to be advantageous for providing a good behavior for sliding in the groove 210 and pivoting about the circumferential axis and the radial axis, while keeping the magnet holder 100 safely interlocked in the groove 210.

**Fig. 4** illustrates aspects of a stroke sensor 300 for an embodiment of the foot brake module, in particular a plunger 200, located within a cylindrical body (not shown), and configured to undergo a displacement in the cylindrical body, and the magnet holder 100, which may be as depicted in the previous Figures. The magnet holder 100 comprises the magnet 124 and is configured to secure the magnet 124 to the plunger 200 by being interlocked within a groove 210 of the plunger 200 via a guide bar 113. The groove 210, here, extends around a circumference of the plunger 200. The stroke sensor 300 is configured to sense, based on the magnet 124, the displacement of the plunger 200 within the cylindrical body.

The stroke sensor 300 comprises a cylindrical chamber 312 within a guiding structure 310, which may be arranged at a side portion of the cylindrical body. The magnet holder 100 is arranged together with the magnet 124 inside the chamber 312. The magnet holder 100 slides in an axial slit in a further wall 317 separating the chamber 312 and the interior (or cavity) of the cylindrical body in which the plunger 200 is positioned. The slit is configured to provide an axial guidance for the magnet holder 100 while preventing relative rotations between the magnet holder 100 and the cylindrical body.

The magnet holder 100 comprises a spring 130, supported on the holding body 120 by being partially included in the overmolding 128 of the holding body 120. Another end of the spring 130 is supported on a wall 315 of the chamber 312. The magnet holder 100 experiences a restoring force exerted by the spring 130 which drives the magnet holder 100 towards a neutral position, and generally supports a controlled movement of the holding body 120 inside the chamber 312.

The stroke sensor 300 comprises a magnetic field sensor (not depicted) which may be located outside an exterior wall of the chamber 310. The magnetic field sensor may be a Hall sensor on a printed circuit board.

The description and drawings illustrate the principles of the disclosure. It will thus be appreciated that those skilled in the art will be able to devise various arrangements that, although not explicitly described or shown herein, embody the principles of the disclosure as defined by the subsequent claims.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 10: crowning
- 20: tapering
- 100: magnet holder
- 110: interlocking element
- 111, 112: arms
- 113: guide bar
- 120: holding body
- 122: window
- 124: magnet
- 126: tapered end
- 128: overmolding
- 129: front face
- 130: spring
- 140: pin
- 200: plunger
- 210: groove
- 300: stroke sensor
- 310: guiding structure
- 312: chamber
- 315: wall
- 317: further wall

## Claims

1. A magnet holder (100) for securing a magnet (124) to a plunger (200) of a stroke sensor,
wherein the stroke sensor comprises a cylindrical body, the plunger (200) is located within the cylindrical body, and the stroke sensor is configured to sense, based on the magnet (124), a displacement of the plunger (200) within the cylindrical body,
**characterized in that**
the magnet holder (100) comprises an interlocking element (110), configured to interlock with a groove (210) in the plunger (200), and, when interlocked, to allow angular play of the plunger (200) around at least one axis.

2. The magnet holder (100) according to claim 1, wherein the angular play amounts to movements within at least one degree and/or at most 10 degrees.

3. The magnet holder (100) according to any one of the preceding claims, wherein the at least one axis coincides, when the magnet holder (100) is in a neutral position with respect to the plunger (200), with one of the following:
- a circumferential direction of the plunger (200),
- a radial direction of the plunger (200).

4. The magnet holder (100) according to any one of the preceding claims, wherein the interlocking element (110) comprises two arms, configured to fit into the groove (210) and partially encompass a circumference of the plunger (200) at a bottom of the groove (210).

5. The magnet holder (100) according to claim 4, wherein the two arms together span between 20 and 40, or about 50 degrees of a circumference of the plunger (200) at the groove (210).

6. The magnet holder (100) according to claim 4 or claim 5, wherein the interlocking element (110) allows the angular play based on the two arms having one or more of the following features:
- a cross-section of the arms has a crowning,
- each arm exhibits a tapering towards an end of the respective arm,
- a diameter of the arms perpendicular to a longitudinal extent of the arms is smaller than a diameter of the groove (210) perpendicular to a longitudinal extent of the groove (210).

7. The magnet holder (100) according to any one of the preceding claims, wherein the magnet holder (100) comprises a body for holding the magnet (124), and a spring supported on the body and configured to be supported on a stop fixed to the cylindrical body such that the magnet holder (100), when interlocked with the groove (210) in the plunger (200), is held by the spring in a neutral position with respect to the plunger (200).

8. The magnet holder (100) according to any one of the preceding claims, wherein the magnet holder (100) comprises the magnet (124)
- in a plastic overmolding, and/or
- in a recess.

9. A stroke sensor for a foot brake module,
**characterized by:**
a cylindrical body;
a plunger (200), located within the cylindrical body, and configured to undergo a displacement in the cylindrical body;
a magnet (124); and
the magnet holder (100) according to any one of the preceding claims, configured to secure the magnet (124) to the plunger (200), wherein the stroke sensor is configured to sense, based on the magnet (124), the displacement of the plunger (200) within the cylindrical body.

10. The stroke sensor according to claim 9, wherein the stroke sensor comprises a chamber arranged at a side portion of the cylindrical body, and the magnet holder (100) is arranged together with the magnet (124) inside the chamber.

11. The stroke sensor according to claim 9 or claim 10, wherein the cylindrical body comprises an axial slot for receiving a part of the magnet holder (100), and configured to provide an axial guidance for the magnet holder (100) while preventing relative rotations between the magnet holder (100) and the cylindrical body.

12. The stroke sensor according to any one of the claims 9 to 11, wherein the stroke sensor comprises a magnetic field sensor which is
- included on a printed circuit board of the strike sensor, and/or
- a Hall sensor.

13. A vehicle with a foot brake module comprising a stroke sensor according to any one of claims 9 to 12.
